(19) 

**Europäisches Patentamt**
**European Patent Office**
**Office européen des brevets**

(11) **EP 4 769 554 A1**

(12) **EUROPEAN PATENT APPLICATION**
published in accordance with Art. 153(4) EPC

(43) Date of publication:
**01.07.2026 Bulletin 2026/27**

(21) Application number: **25848908.7**

(22) Date of filing: **29.07.2025**

(51) International Patent Classification (IPC):
$H01M\ 4/36^{(2006.01)}$  $\quad H01M\ 4/58^{(2010.01)}$
$H01M\ 4/136^{(2010.01)}$  $\quad H01M\ 10/052^{(2010.01)}$
$H01M\ 4/02^{(2006.01)}$

(52) Cooperative Patent Classification (CPC):
**H01M 4/02; H01M 4/136; H01M 4/36; H01M 4/58;**
**H01M 10/052**

(86) International application number:
**PCT/KR2025/011279**

(87) International publication number:
**WO 2026/029548 (05.02.2026 Gazette 2026/06)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **01.08.2024 KR 20240102780**

(71) Applicant: **LG Energy Solution, Ltd.**
**Seoul 07335 (KR)**

(72) Inventors:
• **PARK, Kang Joon**
 **Daejeon 34122 (KR)**
• **PARK, Sin Young**
 **Daejeon 34122 (KR)**

• **LEE, Dong Hun**
 **Daejeon 34122 (KR)**
• **KWON, Woo Jeong**
 **Daejeon 34122 (KR)**
• **GWON, Hoe Yeong**
 **Daejeon 34122 (KR)**
• **KIM, Su Bin**
 **Daejeon 34122 (KR)**
• **PARK, Seung Young**
 **Daejeon 34122 (KR)**
• **SHIM, Min Sub**
 **Daejeon 34122 (KR)**

(74) Representative: **Hoffmann Eitle**
**Patent- und Rechtsanwälte PartmbB**
**Arabellastraße 30**
**81925 München (DE)**

(54) **CATHODE MATERIAL POWDER, AND CATHODE AND LITHIUM SECONDARY BATTERY COMPRISING SAME**

(57)  The present invention relates to positive electrode material powder including a positive electrode active material, wherein the positive electrode active material includes a core; and a shell disposed on a surface of the core, wherein the core includes a first phosphate represented by Formula 1 according to the present invention, and the shell includes a second phosphate represented by Formula 2 according to the present invention.

EP 4 769 554 A1

**Description**

**TECHNICAL FIELD**

**Cross-reference to Related Applications**

This application claims priority from Korean Patent Application No. 10-2024-0102780, filed on August 1, 2024, the disclosure of which is incorporated by reference herein.

**Technical Field**

The present invention relates to positive electrode material powder, and a positive electrode and a lithium secondary battery which include the same.

**BACKGROUND ART**

A lithium secondary battery is generally prepared by a method in which an electrode assembly is formed by disposing a separator between a positive electrode including a positive electrode active material containing lithium and a negative electrode including a negative electrode active material capable of storing lithium ions, the electrode assembly is inserted into a battery case, a non-aqueous electrolyte, which becomes a medium for transferring the lithium ions, is injected, and the battery case is then sealed.

Such lithium secondary batteries are used not only in portable electronic devices such as mobile phones and notebook computers, but also in electric vehicles, and the demand therefor has recently increased rapidly with the expansion of electric vehicle adoption. Particularly, the lithium secondary batteries used in the electric vehicles require high energy density and excellent charge rate capability.

Lithium cobalt-based oxide, lithium nickel-based oxide, lithium manganese-based oxide, lithium nickel cobalt manganese-based oxide, a lithium manganese phosphate-based compound, and a lithium iron phosphate-based compound have been used as the positive electrode active material of the lithium secondary battery.

Among these, since the lithium iron phosphate-based compound has excellent life characteristics and safety due to excellent thermal stability and are inexpensive, it has been widely used as the positive electrode active material of the lithium secondary battery, but it has a problem of low operating voltage and low energy density because it is relatively heavier than other compounds, and has a problem in that it is difficult to achieve excellent charge rate capability.

Thus, there is a need to develop positive electrode material powder that may achieve excellent energy density and charge rate capability while also achieving advantages of the lithium iron phosphate-based compound such as excellent life characteristics and safety due to excellent thermal stability.

**DISCLOSURE OF THE INVENTION**

**TECHNICAL PROBLEM**

An aspect of the present invention provides positive electrode material powder having excellent energy density and excellent charge rate capability by including different types of lithium manganese iron phosphate-based compounds in a core and a shell, but controlling molar contents of manganese (Mn) and iron (Fe) in each compound within specific ranges.

Also, another aspect of the present invention provides a positive electrode and a lithium secondary battery which include the above positive electrode material powder.

However, the object of the present invention is not limited to the aforesaid, but other objects not described herein will be clearly understood by those skilled in the art from descriptions below.

**TECHNICAL SOLUTION**

[1] The present invention provides positive electrode material powder including a positive electrode active material, wherein the positive electrode active material includes a core; and a shell disposed on a surface of the core, wherein the core includes a first phosphate represented by Formula 1, and the shell includes a second phosphate represented by Formula 2.

$$Li_{1+x1}[Mn_{1-a1-b1}Fe_{a1}M^1_{b1}]PO_4$$

In Formula 1, $M^1$ includes at least one selected from the group consisting of aluminum (Al), magnesium (Mg), nickel (Ni), cobalt (Co), titanium (Ti), gallium (Ga), copper (Cu), vanadium (V), niobium (Nb), zirconium (Zr), cerium (Ce), indium (In), zinc (Zn), and yttrium (Y), and $-0.1 \le x1 \le 0.1$, $0.5 < a1 < 1.0$, and $0.0 \le b1 \le 0.1$, and

[Formula 2] $\qquad Li_{1+x2}[Mn_{1-a2-b2}Fe_{a2}M^2_{b2}]PO_4$

In Formula 2, $M^2$ includes at least one selected from the group consisting of Al, Mg, Ni, Co, Ti, Ga, Cu, V, Nb, Zr, Ce, In, Zn, and Y, and $-0.1 \le x2 \le 0.1$, $0.0 \le a2 < 0.5$, and $0.0 \le b2 \le 0.1$.

[2] The present invention provides the positive electrode material powder of [1] above, wherein the first phosphate may be represented by Formula 1-1.

[Formula 1-1] $\qquad Li_{1+x1}[Mn_{1-a1-b1}Fe_{a1}M^1_{b1}]PO_4$

In Formula 1, $M^1$ includes at least one selected from the group consisting of Al, Mg, Ni, Co, Ti, Ga, Cu, V, Nb, Zr, Ce, In, Zn, and Y, and $-0.1 \le x1 \le 0.1$, $0.6 \le a1 \le 0.8$, and $0.0 \le b1 \le 0.1$.

[3] The present invention provides the positive electrode material powder of [1] or [2] above, wherein the second phosphate may be represented by Formula 2-1.

[Formula 2-1] $\qquad Li_{1+x2}[Mn_{1-a2-b2}Fe_{a2}M^2_{b2}]PO_4$

In Formula 2, $M^2$ includes at least one selected from the group consisting of Al, Mg, Ni, Co, Ti, Ga, Cu, V, Nb, Zr, Ce, In, Zn, and Y, and $-0.1 \le x2 \le 0.1$, $0.2 \le a2 \le 0.4$, and $0.0 \le b2 \le 0.1$.

[4] The present invention provides the positive electrode material powder of at least one of [1] to [3] above, wherein a molar ratio (Fe/Mn) of iron (Fe) to manganese (Mn) in the positive electrode active material may be in a range of 0.4 to 2.4.

[5] The present invention provides the positive electrode material powder of at least one of [1] to [4] above, wherein a volume ratio of the core to the shell may be in a range of 20:80 to 80:20.

[6] The present invention provides the positive electrode material powder of at least one of [1] to [5] above, wherein the positive electrode material powder may have an average particle diameter $D_{50}$ of 0.5 $\mu$m to 2.0 $\mu$m.

[7] The present invention provides the positive electrode material powder of at least one of [1] to [6] above, wherein the positive electrode material powder may have a Brunauer-Emmett-Teller (BET) specific surface area of 5 $m^2$/g to 30 $m^2$/g.

[8] The present invention provides the positive electrode material powder of at least one of [1] to [7] above, wherein the positive electrode material powder may have a press density measured after pressing at a pressure of 3 tons of 2.40 g/cc or more.

[9] The present invention provides the positive electrode material powder of at least one of [1] to [8] above, wherein the positive electrode material powder may further include a coating layer containing carbon which is disposed on the shell.

[10] The present invention provides the positive electrode material powder of [9] above, wherein an amount of the carbon contained in the coating layer may be in a range of 0.1 wt% to 5.0 wt% based on a total weight of the positive electrode active material.

[11] The present invention provides a positive electrode including the positive electrode material powder of at least one of [1] to [10] above.

[12] The present invention provides a lithium secondary battery including the positive electrode of [11] above; a negative electrode disposed to face the positive electrode; and an electrolyte.

## ADVANTAGEOUS EFFECTS

A positive electrode active material included in positive electrode material powder according to the present invention includes a phosphate represented by Formula 1 in a core and a phosphate represented by Formula 2 in a shell. The phosphate represented by Formula 1 has excellent electronic conductivity and lithium ion conductivity, and the phosphate represented by Formula 2 has high operating voltage. Thus, in a case in which the positive electrode material powder according to the present invention is used, energy density and charge rate capability of a lithium secondary battery may be improved.

## MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular embodiments only and is not intended to be limiting of the invention. The terms of a singular form may include plural forms unless referred to the contrary.

In the present invention, it will be further understood that the terms "include," "comprise," or "have" specify the presence of stated features, numbers, steps, elements, or combinations thereof, but do not preclude the presence or addition of one or more other features, numbers, steps, elements, or combinations thereof.

In the present invention, a "Brunauer-Emmett-Teller (BET) specific surface area" is measured by a BET method, wherein, specifically, the BET specific surface area may be calculated from a nitrogen gas adsorption amount at a liquid nitrogen temperature (77K) using BELSORP-mino II by Bell Japan Inc.

An "average particle diameter $D_{50}$" in the present invention denotes a particle size on the basis of 50% in a volume cumulative particle size distribution of particles. The average particle diameter $D_{50}$ may be measured by using a laser diffraction method. The laser diffraction method may generally measure a particle diameter ranging from a submicron level to a few mm and may obtain highly repeatable and high-resolution results.

As a result of a significant amount of research conducted to improve energy density and charge rate capability of a lithium secondary battery, the present inventors have found that in a case in which positive electrode material powder including a lithium manganese iron phosphate-based compound with a high iron (Fe) content in a core and a lithium manganese iron phosphate-based compound with a high manganese (Mn) content in a shell is used, the energy density and charge rate capability of the lithium secondary battery may be improved, thereby leading to the completion of the present invention.

Hereinafter, the present invention will be described in detail.

Positive electrode material powder according to the present invention and a positive electrode and a lithium secondary, which include the same, include at least one of configurations disclosed below, and may include any combination between technically possible configurations among the configurations below.

## Positive Electrode Material Powder

Hereinafter, positive electrode material powder according to the present invention will be described.

The positive electrode material powder according to the present invention is positive electrode material powder including a positive electrode active material,
wherein the positive electrode active material includes a core; and a shell disposed on a surface of the core, wherein the core includes a first phosphate represented by Formula 1 below, and the shell includes a second phosphate represented by Formula 2 below.

$$\text{[Formula 1]} \qquad \text{Li}_{1+x1}[\text{Mn}_{1-a1-b1}\text{Fe}_{a1}\text{M}^1_{b1}]\text{PO}_4$$

In Formula 1, $M^1$ includes at least one selected from the group consisting of aluminum (Al), magnesium (Mg), nickel (Ni), cobalt (Co), titanium (Ti), gallium (Ga), copper (Cu), vanadium (V), niobium (Nb), zirconium (Zr), cerium (Ce), indium (In), zinc (Zn), and yttrium (Y), and $-0.1 \leq x1 \leq 0.1$, $0.5 < a1 < 1.0$, and $0.0 \leq b1 \leq 0.1$, and

$$\text{[Formula 2]} \qquad \text{Li}_{1+x2}[\text{Mn}_{1-a2-b2}\text{Fe}_{a2}\text{M}^2_{b2}]\text{PO}_4$$

In Formula 2, $M^2$ includes at least one selected from the group consisting of Al, Mg, Ni, Co, Ti, Ga, Cu, V, Nb, Zr, Ce, In, Zn, and Y, and $-0.1 \leq x2 \leq 0.1$, $0.0 \leq a2 < 0.5$, and $0.0 \leq b2 \leq 0.1$.

With respect to a lithium manganese phosphate-based compound and a lithium iron phosphate-based compound which have an olivine structure, there is a problem of low lithium ion conductivity during charge and discharge due to the presence of a one-dimensional lithium ion diffusion path within the crystal structure. Thus, charge and discharge may be performed even at high output only by controlling an average particle diameter of the compound to several tens to several hundreds of nanometers. However, in a case in which the average particle diameter of the compound is excessively small, there is a limitation in increasing a solid content in a slurry, and since achievement of a high-density electrode is difficult due to unfavorable rolling, there is a problem of low energy density.

Particularly, since the lithium iron phosphate-based compound has higher electronic conductivity and lithium ion conductivity than the lithium manganese phosphate-based compound, it has excellent charging output. Thus, since influence on battery performance is small even if the average particle diameter is relatively increased, it is possible to achieve a high-density electrode, but there is a problem in that energy density is low due to low operating voltage.

In contrast, the lithium manganese phosphate-based compound has high energy density due to high operating voltage, but since there is a limitation in increasing the particle size of the compound due to poor charge output characteristics, there is a problem in that it is difficult to achieve a high-density electrode.

To solve this problem, a method of using a lithium manganese iron phosphate-based compound (e.g., $LiMn_xFe_{(1-x)}PO_4$), in which a molar ratio of iron to manganese in lithium phosphate is controlled, as a positive electrode active material has been proposed, but there is a problem in that it is difficult to overcome a trade-off relationship between advantages/disadvantages of each of the above-described lithium iron phosphate-based compound and lithium manganese phosphate-based compound.

Thus, in order to solve the above-described problem in the present invention, positive electrode material powder including a positive electrode active material, in which a lithium manganese iron phosphate-based compound having a high iron content is included in a core and a lithium manganese iron phosphate-based compound having a high manganese content is included in a shell, is to be applied to a lithium secondary battery.

In this case, the lithium manganese iron phosphate-based compound included in the core has excellent charging output due to the high iron content, and the lithium manganese iron phosphate-based compound included in the shell has low charging output due to the high manganese content, but has high energy density and, since it is included in the shell, an average particle diameter of the positive electrode active material may be increased. That is, when the above condition is satisfied, it is possible to prepare a positive electrode active material having excellent energy density and excellent charge rate capability, beyond the above-described trade-off relationship.

In contrast, in a case in which the lithium manganese iron phosphate-based compound having a high manganese content is included in the core, a difference between an outermost radius and an innermost radius from the center becomes larger than the case where the lithium manganese iron phosphate-based compound having a high manganese content is included in the shell. For example, if it is assumed that a core and a shell within a spherical particle with a radius of 0.5 $\mu$m have a volume ratio of 50:50, a difference (radius) between an outermost radius and an innermost radius from a center of the core is about 0.4 $\mu$m, and a difference (thickness) between an outermost radius and an innermost radius from a center of the shell is about 0.1 $\mu$m. That is, in the case that the lithium manganese iron phosphate-based compound having a high manganese content is included in the core, since the radius or thickness of the lithium manganese iron phosphate-based compound having a one-dimensional lithium ion diffusion path is increased, the diffusion path becomes longer, and thus, a problem occurs in which resistance due to manganese oxidation during charging is further increased. Also, since the average particle diameter may not be sufficiently increased, a problem occurs in which the energy density is low and the charge rate capability is low.

Furthermore, in a case in which a compound included in the core is prepared by including a lithium iron phosphate-based compound (e.g., $LiFePO_4$) rather than the lithium manganese iron phosphate-based compound, there is a problem in that lattice mismatch between the core and the shell becomes more severe. Thus, since high activation energy is required when lithium ions pass through a boundary between the core and the shell during charge and discharge, a problem of low charge rate capability arises.

Hereinafter, the positive electrode material powder according to the present invention will be described in more detail.

(1) Core

In the positive electrode material powder according to the present invention, the positive electrode active material includes a core, and the core includes a first phosphate represented by Formula 1 below.

[Formula 1]     $Li_{1+x1}[Mn_{1-a1-b1}Fe_{a1}M^1_{b1}]PO_4$

In Formula 1, $M^1$ includes at least one selected from the group consisting of Al, Mg, Ni, Co, Ti, Ga, Cu, V, Nb, Zr, Ce, In, Zn, and Y, may preferably include at least one selected from the group consisting of Mg, Ti, V, and Nb, and may more preferably include at least one selected from the group consisting of Ti and V. In a case in which the above conditions are satisfied, an effect, such as suppression of structural changes during repeated charge and discharge of the positive electrode active material, may be obtained.

$x1$ is -0.1 to 0.1. In a case in which the above range is satisfied, high capacity characteristics and high energy density per unit volume may be achieved.

$a1$ is a mole fraction of iron (Fe) among total metals excluding lithium in the first phosphate, wherein $a1$ is greater than 0.5 and less than 1.0. Preferably, $a1$ may be greater than 0.5, 0.55 or more, or 0.6 or more, and may be less than 1.0, 0.95 or less, 0.90 or less, 0.85 or less, or 0.80 or less.

In a case in which a1 is 0.5 or less, since the manganese oxidation becomes more severe, a problem occurs in which the resistance is increased during charging, and thus, the charge rate capability is reduced. Also, in a case in which a1 is 1.0, since the lattice mismatch between the core and the shell becomes more severe, the activation energy for lithium diffusion increases to increase the resistance, and thus, the problem of low charge rate capability arises. Thus, in a case in which the above range is satisfied, the charging output is excellent due to high electronic conductivity and lithium ion conductivity, and the particle size may be controlled relatively large to achieve excellent energy density.

b1 is a mole fraction of $M^1$ among the total metals excluding lithium in the first phosphate, wherein b1 may be in a range of 0.0 to 0.1, may preferably be 0.001 or more, 0.002 or more, 0.003 or more, 0.004 or more, 0.005 or more, 0.006 or more, 0.007 or more, 0.008 or more, or 0.009 or more, and may be 0.1 or less, 0.09 or less, 0.08 or less, 0.07 or less, 0.06 or less, 0.05 or less, 0.04 or less, 0.03 or less, 0.02 or less, or 0.01 or less. In a case in which the above range is satisfied, ionic conductivity and electrical conductivity may be improved.

Preferably, the core may include a first phosphate represented by Formula 1-1 below.

$$[\text{Formula 1-1}] \qquad Li_{1+x1}[Mn_{1-a1-b1}Fe_{a1}M^1_{b1}]PO_4$$

In Formula 1, $M^1$ includes at least one selected from the group consisting of Al, Mg, Ni, Co, Ti, Ga, Cu, V, Nb, Zr, Ce, In, Zn, and Y, and $-0.1 \leq x1 \leq 0.1$, $0.6 \leq a1 \leq 0.8$, and $0.0 \leq b1 \leq 0.1$.

(2) Shell

In the positive electrode material powder according to the present invention, the positive electrode active material includes a shell disposed on a surface of the core, and the shell includes a second phosphate represented by Formula 2 below.

$$[\text{Formula 2}] \qquad Li_{1+x2}[Mn_{1-a2-b2}Fe_{a2}M^2_{b2}]PO_4$$

In Formula 2, $M^2$ includes at least one selected from the group consisting of Al, Mg, Ni, Co, Ti, Ga, Cu, V, Nb, Zr, Ce, In, Zn, and Y, may preferably include at least one selected from the group consisting of Mg, Ti, V, and Nb, and may more preferably include at least one selected from the group consisting of Ti and V. In a case in which the above conditions are satisfied, the effect, such as the suppression of structural changes during repeated charge and discharge of the positive electrode active material, may be obtained.

x2 is -0.1 to 0.1. In a case in which the above range is satisfied, the high capacity characteristics and high energy density per unit volume may be achieved.

a2 is a mole fraction of iron (Fe) among total metals excluding lithium in the second phosphate, wherein a2 is less than 0.5. Preferably, a2 may be 0.05 or more, 0.10 or more, 0.15 or more, or 0.20 or more, and may be less than 0.5, 0.45 or less, or 0.40 or less.

In a case in which a2 is 0.5 or more, an average content of manganese (Mn) in the positive electrode active material is decreased, and there is a problem in that the energy density is reduced due to the low content of the manganese (Mn) included in the shell. Thus, in a case in which the above range is satisfied, excellent energy density may be achieved by controlling the average particle diameter of the positive electrode material powder to be relatively large while increasing the manganese (Mn) content.

b2 is a mole fraction of $M^2$ among the total metals excluding lithium in the second phosphate, wherein b1 may be in a range of 0.0 to 0.1, may preferably be 0.001 or more, 0.002 or more, 0.003 or more, 0.004 or more, 0.005 or more, 0.006 or more, 0.007 or more, 0.008 or more, or 0.009 or more, and may be 0.1 or less, 0.09 or less, 0.08 or less, 0.07 or less, 0.06 or less, 0.05 or less, 0.04 or less, 0.03 or less, 0.02 or less, or 0.01 or less. In a case in which the above range is satisfied, the ionic conductivity and the electrical conductivity may be improved.

Preferably, the shell may include a second phosphate represented by Formula 2-1 below.

$$[\text{Formula 2-1}] \qquad Li_{1+x2}[Mn_{1-a2-b2}Fe_{a2}M^2_{b2}]PO_4$$

In Formula 2, $M^2$ includes at least one selected from the group consisting of Al, Mg, Ni, Co, Ti, Ga, Cu, V, Nb, Zr, Ce, In, Zn, and Y, and $-0.1 \leq x2 \leq 0.1$, $0.2 \leq a2 \leq 0.4$, and $0.0 \leq b2 \leq 0.1$.

A molar ratio (Fe/Mn) of Fe to Mn in the positive electrode active material may be in a range of 0.4 to 2.4, preferably 0.42 to 2.34, and more preferably 0.66 to 1.5. The molar ratio (Fe/Mn) of Fe to Mn in the positive electrode active material may be different from compositions of the phosphates respectively present in the core and/or the shell, wherein it refers to a molar ratio of Fe to Mn in the positive electrode active material including the core and shell. In a case in which the above range is satisfied, excellent energy density may be achieved while also achieving excellent charging output.

A volume ratio of the core to the shell may be in a range of 20:80 to 80:20, preferably 30:70 to 70:30, and more preferably 40:60 to 60:40. In a case in which the above range is satisfied, excellent charge output characteristics and energy density may be achieved while the particle size is significantly increased.

The positive electrode material powder may have an average particle diameter $D_{50}$ of 0.5 $\mu$m to 2.0 $\mu$m, preferably 0.7 $\mu$m to 1.5 $\mu$m, and more preferably 0.8 $\mu$m to 1.2 $\mu$m. In a case in which the above range is satisfied, since a solid content of a slurry during preparation of an electrode may be easily increased while achieving a high-density electrode due to high press density of the positive electrode material powder, it is desirable in that excellent energy density and processability may be achieved and excellent charge output characteristics may be achieved. Also, the positive electrode material powder according to the present invention includes the lithium manganese iron phosphate-based compound rich in manganese (Mn), but since it is disposed in a shell layer of the positive electrode active material, it has a characteristic in that excellent charge output characteristics may be achieved even if the above-described average particle diameter is satisfied.

The positive electrode material powder may have a BET specific surface area of 5 m$^2$/g to 30 m$^2$/g, preferably 10 m$^2$/g to 25 m$^2$/g, and more preferably 12 m$^2$/g to 20 m$^2$/g. In a case in which the above range is satisfied, it may be desirable in that the increase in the solid content of the slurry during the preparation of the electrode may be easy and electrolyte solution impregnability is excellent.

The positive electrode material powder may have a press density measured after pressing at a pressure of 3 tons of 2.40 g/cc or more, preferably 2.40 g/cc to 3.00 g/cc, more preferably 2.45 g/cc to 2.90 g/cc, and still more preferably 2.46 g/cc to 2.80 g/cc. For example, the press density may be measured by collecting 1 g of the positive electrode material powder, putting it in a cylindrical metal mold with a diameter of 1.3 cm, and pressing it with a load of 3 tons. In a case in which the above range is satisfied, since a high-density electrode may be easily prepared, excellent energy density may be achieved.

The positive electrode material powder may further include a coating layer containing carbon which is disposed on the shell. In a case in which the above condition is satisfied, electronic conductivity of the positive electrode material powder may be improved.

An amount of the carbon contained in the coating layer may be in a range of 0.1 wt% to 5.0 wt%, preferably 0.25 wt% to 4.0 wt%, and more preferably 0.5 wt% to 3.0 wt% based on a total weight of the positive electrode material powder. In a case in which the above range is satisfied, it may be desirable in that it may improve the electronic conductivity of the positive electrode material powder while not acting as a resistance.

## Positive Electrode

Hereinafter, a positive electrode according to the present invention will be described.

The positive electrode according to the present invention includes the above-described positive electrode material powder. Preferably, the positive electrode may include a positive electrode active material layer including the above-described positive electrode material powder, and may more preferably include a positive electrode collector; and a positive electrode active material layer disposed on the positive electrode collector and including the above-described positive electrode active material.

Hereinafter, each component of the positive electrode according to the present invention will be described in detail.

(1) Positive Electrode Collector

As the positive electrode collector, various positive electrode collectors used in the art may be used. For example, as the positive electrode collector, stainless steel, aluminum, nickel, titanium, fired carbon, or aluminum or stainless steel that is surface-treated with one of carbon, nickel, titanium, silver, or the like may be used. The positive electrode collector may typically have a thickness of 3 $\mu$m to 500 $\mu$m, and microscopic irregularities may be formed on a surface of the collector to improve the adhesion of the positive electrode active material. The positive electrode collector, for example, may be used in various shapes such as that of a film, a sheet, a foil, a net, a porous body, a foam body, a non-woven fabric body, and the like.

(2) Positive Electrode Active Material Layer

The positive electrode active material layer may be disposed on the positive electrode collector, and may preferably be disposed on one side or both sides of the positive electrode collector. The positive electrode active material layer may have a single-layer structure or a multilayer structure of two or more layers.

The positive electrode active material layer may include the positive electrode material powder according to the present invention, a positive electrode conductive agent, and a positive electrode binder.

The positive electrode active material may be included in an amount of 90 wt% to 99 wt%, preferably 92 wt% to 98 wt%, and more preferably 92 wt% to 98 wt% based on a total weight of the positive electrode active material layer. In a case in which the above range is satisfied, energy density and capacity characteristics of a lithium secondary battery, in which the positive electrode is used, may be improved.

The positive electrode conductive agent is used to provide conductivity to the electrode, wherein any conductive agent may be used without particular limitation as long as it has electron conductivity without causing chemical changes in the battery. Specific examples of the positive electrode conductive agent may be graphite such as natural graphite or artificial graphite; a carbon-based material such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The positive electrode conductive agent may be typically included in an amount of 0.1 wt% to 10 wt%, preferably 0.1 wt% to 8 wt%, and more preferably 0.1 wt% to 5 wt% based on the total weight of the positive electrode active material layer.

The positive electrode binder improves adhesion between positive electrode material particles and adhesion between the positive electrode material and the positive electrode collector, wherein specific examples of the positive electrode binder may be a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styreneisoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder, and any one thereof or a mixture of two or more thereof may be used. The positive electrode binder may be included in an amount of 1 wt% to 10 wt%, preferably 0.5 wt% to 10 wt%, and more preferably 1 wt% to 8 wt% based on the total weight of the positive electrode active material layer.

The positive electrode may be prepared by a method known in the art. For example, after a positive electrode slurry is prepared by mixing the positive electrode material powder, the positive electrode binder, and the positive electrode conductive agent in a solvent and is applied onto the positive electrode collector, the positive electrode may be prepared by drying and rolling the coated positive electrode collector or the positive electrode may be prepared by casting the positive electrode slurry on a separate support and then laminating a film separated from the support on the positive electrode collector. In this case, as the solvent of the positive electrode slurry, positive electrode slurry solvents normally used in the art may be used, and, for example, dimethyl sulfoxide (DMSO), isopropyl alcohol, N-methylpyrrolidone (NMP), acetone, water, or a mixture of thereof may be used, but the present invention is not limited thereto. The solvent may be used in an amount such that it dissolves or disperses the positive electrode active material, the positive electrode conductive agent, and the positive electrode binder, and has a viscosity that allows the positive electrode slurry to be uniformly applied.

## Lithium Secondary Battery

Hereinafter, a lithium secondary battery according to the present invention will be described.

The lithium secondary battery according to the present invention includes a positive electrode according to the present invention; a negative electrode disposed to face the positive electrode; and an electrolyte. Optionally, the lithium secondary battery according to the present invention may further include a separator disposed between the positive electrode and the negative electrode.

Since the positive electrode is the same as described above, the remaining components excluding the positive electrode will be described below.

(1) Negative Electrode

In the lithium secondary battery according to the present invention, the negative electrode includes a negative electrode active material layer including a negative electrode active material, and specifically, may include a negative electrode collector and a negative electrode active material layer disposed on at least one side of the negative electrode collector.

The negative electrode collector is not particularly limited as long as it has high conductivity without causing chemical changes in the battery, and, for example, copper, stainless steel, aluminum, nickel, titanium, fired carbon, copper or stainless steel that is surface-treated with carbon, nickel, titanium, silver, or the like, and an aluminum-cadmium alloy may be used. Also, the negative electrode collector may typically have a thickness of 3 $\mu$m to 500 $\mu$m, and, similar to the positive electrode collector, microscopic irregularities may be formed on the surface of the collector to improve adhesion of a negative electrode active material. The negative electrode collector, for example, may be used in various shapes such as that of a film, a sheet, a foil, a net, a porous body, a foam body, a non-woven fabric body, and the like.

The negative electrode active material layer may be disposed on the negative electrode collector, and may specifically be disposed on one side or both sides of the negative electrode collector. The negative electrode active material layer may have a single-layer structure or a multilayer structure of two or more layers.

In a case in which the negative electrode active material layer has a multilayer structure composed of two or more layers, each layer may have different types and/or amounts of the negative electrode active material, a negative electrode binder, and/or a negative electrode conductive agent. Performance characteristics, such as rapid charging performance and output characteristics, of the battery may be appropriately controlled by forming the negative electrode active material layer into a multilayer structure and varying a composition of each layer.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_\beta(0<\beta<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used.

Both low crystalline carbon and high crystalline carbon may be used as the carbonaceous material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

Preferably, the negative electrode active material may be a carbon-based negative electrode active material, and in this case, the carbon-based negative electrode active material, for example, may include natural graphite, artificial graphite, graphitized carbon fibers, amorphous carbon, soft carbon, hard carbon, or a combination thereof. More preferably, the carbon-based negative electrode active material may include natural graphite and artificial graphite.

The carbon-based negative electrode active material may have an average particle diameter $D_{50}$ of 0.1 $\mu$m to 30 $\mu$m, preferably 0.5 $\mu$m to 30 $\mu$m.

The negative electrode active material may be included in an amount of 80 wt% to 98 wt%, preferably 90 wt% to 98 wt%, and more preferably 93 wt% to 98 wt% based on a total weight of the negative electrode active material layer. When the amount of the negative electrode active material satisfies the above range, excellent energy density may be achieved.

The negative electrode active material layer may further include a negative electrode conductive agent and a negative electrode binder together with the negative electrode active material.

The negative electrode conductive agent is used to provide conductivity to the negative electrode, wherein any conductive agent may be used without particular limitation as long as it has electron conductivity without causing chemical changes in the battery. Specific examples of the negative electrode conductive agent may be a carbon-based material such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used.

The negative electrode conductive agent may be typically included in an amount of 0.1 wt% to 10 wt%, preferably 0.1 wt% to 8 wt%, and more preferably 0.1 wt% to 5 wt% based on the total weight of the negative electrode active material layer.

The negative electrode binder improves adhesion between the negative electrode active material particles and adhesion between the negative electrode active material and the negative electrode collector. Specific examples of the negative electrode binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, an ethylene-propylene-diene monomer rubber (EPDM rubber), a sulfonated-EPDM, a styrene-butadiene rubber (SBR), a fluoro rubber, and various copolymers thereof, and any one thereof or a mixture of two or more thereof may be used.

The negative electrode binder may be included in an amount of 0.1 wt% to 10 wt%, preferably 0.5 wt% to 10 wt%, and more preferably 1 wt% to 8 wt% based on the total weight of the negative electrode active material layer.

The negative electrode may be prepared by a method known in the art. For example, after a negative electrode slurry is prepared by mixing the negative electrode active material, the negative electrode binder, and/or the negative electrode conductive agent in a solvent and is applied onto the negative electrode collector, the negative electrode may be prepared by drying and rolling the coated negative electrode collector or the negative electrode may be prepared by casting the negative electrode slurry on a separate support and then laminating a film separated from the support on the negative electrode collector.

As the solvent of the negative electrode slurry, solvents normally used in the art may be used, and, for example, dimethyl sulfoxide (DMSO), isopropyl alcohol, N-methylpyrrolidone (NMP), acetone, water, or a mixture of thereof may be used, but the present invention is not limited thereto. The solvent may be used in an amount such that it dissolves or disperses the negative electrode active material, the negative electrode conductive agent, and the negative electrode binder, and has a viscosity that allows the negative electrode slurry to be uniformly applied.

(2) Electrolyte

The electrolyte according to the present invention includes a lithium salt and an organic solvent.

The lithium salt may be used without particular limitation as long as it is a compound capable of providing lithium ions used in the lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, LiFSI, or $LiB(C_2O_4)_2$ may be used as the lithium salt. The lithium salt may be used in a concentration range of 0.1 M to 5.0 M, preferably, 0.1 M to 3.0 M. If the concentration of the lithium salt is included within the above range, since the electrolyte may have appropriate conductivity and viscosity, excellent performance of the electrolyte may be obtained and lithium ions may effectively move.

The organic solvent may include at least one selected from the group consisting of a cyclic carbonate-based organic solvent, a linear carbonate-based organic solvent, a linear ester-based organic solvent, and a cyclic ester-based organic solvent.

The cyclic carbonate-based organic solvent is a highly viscous organic solvent, wherein the cyclic carbonate-based organic solvent may typically include at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate.

Also, the linear carbonate-based organic solvent is an organic solvent having low viscosity and low permittivity, wherein typical examples of the linear carbonate-based organic solvent may be at least one organic solvent selected from the group consisting of dimethyl carbonate (DMC), diethyl carbonate (DEC), dipropyl carbonate, ethyl methyl carbonate (EMC), methylpropyl carbonate, and ethylpropyl carbonate, and the linear carbonate-based organic solvent may specifically include ethyl methyl carbonate (EMC).

Specific examples of the linear ester-based organic solvent may be at least one organic solvent selected from the group consisting of methyl acetate, ethyl acetate, propyl acetate, methyl propionate, ethyl propionate, propyl propionate, and butyl propionate.

The cyclic ester-based organic solvent may include at least one organic solvent selected from the group consisting of butyrolactone, valerolactone, and caprolactone.

Preferably, the electrolyte according to the present invention may include ethylene carbonate and dimethyl carbonate as the organic solvent.

In order to improve life characteristics of the battery, suppress the reduction in battery capacity, and improve discharge capacity of the battery, the electrolyte may further include other additives in addition to the above electrolyte components.

As representative examples, the other additives may include at least one other additive selected from the group consisting of a cyclic carbonate-based compound, a halogen-substituted carbonate-based compound, a sultone-based compound, a sulfate-based compound, a borate-based compound, a nitrile-based compound, a benzene-based compound, an amine-based compound, a silane-based compound, and a lithium salt-based compound different from the lithium salt contained in the electrolyte.

Specifically, the other additives may include one or more compounds selected from the group consisting of vinylene carbonate (VC), vinyl ethylene carbonate, fluoroethylene carbonate (FEC), 1,3-propane sultone (PS), 1,4-butane sultone, ethane sultone, 1,3-propene sultone (PRS), 1,4-butene sultone, 1-methyl-1,3-propene sultone, ethylene sulfate (Esa), trimethylene sulfate (TMS), methyl trimethylene sulfate (MTMS), tetraphenylborate, lithium oxalyldifluoroborate, succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, fluorobenzene, triethanolamine, ethylenediamine, tetravinylsilane, $LiN(SO_2F)_2$ (Lithium bis(fluorosulfonyl)imide, LiFSI), $LiN(SO_2CF_3)_2$ (lithium bis(trifluoromethane sulfonyl)imide, LiTFSI), $LiPO_2F_2$, LiODFB, LiBOB (lithium bis(oxalato)borate, $LiB(C_2O_4)_2$), and $LiBF_4$.

The other additives may be included in an amount of 0.01 wt% to 20 wt%, and may preferably be included in an amount of 0.05 wt% to 5.0 wt% based on a total weight of the electrolyte. If the amount of the other additives is less than 0.01 wt%, effects of improving low-temperature output, high-temperature storage characteristics, and high-temperature life characteristics of the battery are insignificant, and, if the amount of the other additives is greater than 20 wt%, there is a possibility that a side reaction in the electrolyte occurs excessively during charge and discharge of the battery. Particularly, since the other additives may not be sufficiently decomposed at high temperatures when an excessive amount of the additives for forming a solid electrolyte interface (SEI) layer is added, the other additives may be present in the form of an unreacted material or precipitates in the electrolyte at room temperature. Accordingly, a side reaction may occur in which life or resistance characteristics of the secondary battery are degraded.

(3) Separator

The separator separates the negative electrode and the positive electrode and provides a movement path of lithium ions, wherein any separator may be used as the separator without particular limitation as long as it is typically used in a lithium secondary battery. In this case, the separator may be disposed between the positive electrode and the negative electrode.

Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

The lithium secondary battery according to the present invention as described above may be suitably used in portable devices, such as mobile phones, notebook computers, and digital cameras, and electric cars such as hybrid electric vehicles (HEVs). The lithium secondary battery according to the present invention may be particularly useful in the field of electric vehicles because it may achieve excellent output characteristics even under low-temperature conditions.

According to another embodiment of the present invention, a battery module including the lithium secondary battery according to the present invention as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

Hereinafter, the present invention will be described in more detail, according to specific examples. However, the following examples are merely provided to enable those skilled in the art to fully understand and easily carry out the present invention, and the scope of the present invention is not limited thereto.

**Example 1**

$Li_2CO_3$, $MnCO_3$, $FeC_2O_4$, and $(NH_4)_2HPO_4$ were mixed in an aqueous solution at a molar ratio of 0.5:0.3:0.7:1, and then sintered at 180°C for 12 hours to prepare $LiMn_{0.3}Fe_{0.7}PO_4$.

Thereafter, an aqueous solution containing $Li_2CO_3$, $MnCO_3$, $FeC_2O_4$, and $(NH_4)_2HPO_4$ in a molar ratio of 0.5:0.7:0.3:1 and the obtained $LiMn_{0.3}Fe_{0.7}PO_4$ were mixed in the aqueous solution, and then sintered at 180°C for 12 hours to prepare a phosphate having a composition of a core of $LiMn_{0.3}Fe_{0.7}PO_4$ and a composition of a shell of $LiMn_{0.7}Fe_{0.3}PO_4$.

Thereafter, the obtained phosphate was washed and dried, mixed with glucose, and then heat-treated at 700°C for 12 hours to prepare a phosphate having a carbon coating layer formed thereon.

Thereafter, the phosphate having a carbon coating layer formed thereon was ground and classified to prepare positive electrode material powder.

**Comparative Example 1**

$Li_2CO_3$, $MnCO_3$, $FeC_2O_4$, and $(NH_4)_2HPO_4$ were mixed in an aqueous solution at a molar ratio of 0.5:0.6:0.4:1, and then sintered at 180°C for 12 hours to prepare $LiMn_{0.6}Fe_{0.4}PO_4$.

Thereafter, the obtained phosphate was washed and dried, mixed with glucose, and then heat-treated at 700°C for 12 hours to prepare a phosphate having a carbon coating layer formed thereon.

Thereafter, the phosphate having a carbon coating layer formed thereon was ground and classified to prepare positive electrode material powder.

**Comparative Example 2**

$Li_2CO_3$, $FeC_2O_4$, and $(NH_4)_2HPO_4$ were mixed in an aqueous solution at a molar ratio of 0.5:1:1, and then sintered at 180°C for 12 hours to prepare $LiFePO_4$.

Thereafter, an aqueous solution containing $Li_2CO_3$, $MnCO_3$, and $(NH_4)_2HPO_4$ in a molar ratio of 0.5:1:1 and the obtained $LiFePO_4$ were mixed in the aqueous solution, and then sintered at 180°C for 12 hours to prepare a phosphate having a composition of a core of $LiFePO_4$ and a composition of a shell of $LiMnPO_4$.

Thereafter,the obtained phosphate was washed and dried, mixed with glucose, and then heat-treated at 700°C for 12 hours to prepare a phosphate having a carbon coating layer formed thereon.

Thereafter, the phosphate having a carbon coating layer formed thereon was ground and classified to prepare positive electrode material powder.

**Comparative Example 3**

$Li_2CO_3$, $MnCO_3$, and $(NH_4)_2HPO_4$ were mixed in an aqueous solution at a molar ratio of 0.5:1:1, and then sintered at 180°C for 12 hours to prepare $LiMnPO_4$.

Thereafter, an aqueous solution containing $Li_2CO_3$, $FeC_2O_4$, and $(NH_4)_2HPO_4$ in a molar ratio of 0.5:1:1 and the obtained $LiMnPO_4$ were mixed in the aqueous solution, and then sintered at 180°C for 12 hours to prepare a phosphate having a composition of a core of $LiMnPO_4$ and a composition of a shell of $LiFePO_4$.

Thereafter,the obtained phosphate was washed and dried, mixed with glucose, and then heat-treated at 700°C for 12 hours to prepare a phosphate having a carbon coating layer formed thereon.

Thereafter, the phosphate having a carbon coating layer formed thereon was ground and classified to prepare positive electrode material powder.

After measuring average particle diameters $D_{50}$ and BET specific surface areas of the prepared positive electrode material powders, the results thereof for the above-described positive electrode material powders were summarized and presented in Table 1 below.

[Table 1]

| | Positive electrode material powder | | | | |
|---|---|---|---|---|---|
| | Compositi on of core | Compositi on of shell | Molar ratio (Fe/Mn) of Fe to Mn in positive electrode active material | Average particle diameter $D_{50}$ ($\mu$m) | BET specific surface area ($m^2$/g) |
| Example 1 | $LiMn_{0.3}Fe_{0.7}PO_4$ | $LiMn_{0.7}Fe_{0.3}PO_4$ | 0.67 | 0.88 | 12 |
| Comparative Example 1 | $LiMn_{0.6}Fe_{0.4}PO_4$ | | 0.67 | 0.48 | 16 |
| Comparative Example 2 | $LiFePO_4$ | $LiMnPO_4$ | 0.67 | 0.89 | 12 |
| Comparative Example 3 | $LiMnPO_4$ | $LiFePO_4$ | 0.67 | 0.88 | 12 |

**Experimental Example 1: Press Density Measurement**

1 g of each of the positive electrode material powders prepared in Example 1 and Comparative Examples 1 to 3 was collected, then put in a cylindrical metal mold with a diameter of 1.3 cm, and pressed with a load of 3 tons. Thereafter, a height of the pressed mold was measured using a vernier caliper to measure press density.

Measurement results are presented in [Table 2] below.

**Experimental Example 2: Charge Rate Capability Evaluation**

**1) Preparation of Lithium Secondary Battery Half-Cell**

Each of the positive electrode material powders prepared in Example 1 and Comparative Examples 1 to 3, a positive electrode conductive agent (Super P), and a positive electrode binder (PVdF) were mixed in N-methylpyrrolidone in a weight ratio of 95:2:3 to prepare a positive electrode slurry. An aluminum current collector was coated with the positive electrode slurry, dried, and rolled to prepare a positive electrode.

Lithium metal was used as a negative electrode.

An electrode assembly was prepared by disposing a porous polyethylene separator between the positive electrode and the negative electrode which were prepared as described above, and a lithium secondary battery was prepared by disposing the electrode assembly in a case and then injecting an electrolyte solution into the case. In this case, the electrolyte solution was prepared by dissolving 1.2 M lithium hexafluorophosphate ($LiPF_6$) in an organic solvent in which ethylene carbonate and diethyl carbonate were mixed in a weight ratio of 3:7.

**2) Charge Rate Capability Evaluation**

After formation of the above-prepared lithium secondary batteries, each lithium secondary battery was charged at a constant current of 0.1C at 25°C until the voltage reached 4.2 V, and then discharged at a constant current of 0.1C until the voltage reached 2.5 V to measure 0.1C charge capacity.
Thereafter, the lithium secondary battery was charged at a constant current of 2.0C to 4.2 V to measure 2.0C charge capacity.
Using the measured 0.1C and 2.0C charge capacities, charge rate capability was evaluated as follows.

Charge rate capability (%): (2.0C charge capacity)/(0.1C charge capacity) $\times$ 100

Measurement results are presented in [Table 2] below.

[Table 2]

|  | Press density (g/cc) | Charge rate capability (%) |
|---|---|---|
| Example 1 | 2.46 | 79.7 |
| Comparative Example 1 | 2.39 | 77.5 |
| Comparative Example 2 | 2.45 | 77.6 |
| Comparative Example 3 | 2.46 | 69.1 |

According to Table 2, it may be understood that the positive electrode material powder satisfying the compositions of the phosphates included in the core and the shell according to the present invention had better press density than the positive electrode material powders that did not satisfy the compositions.
Also, it may be understood that the lithium secondary battery, in which the positive electrode material powder satisfying the compositions of the phosphates included in the core and the shell according to the present invention was used, had better charge rate capability than the lithium secondary batteries in which the positive electrode material powders, which did not satisfy the compositions, were used.

**Claims**

1.   Positive electrode material powder comprising a positive electrode active material,

wherein the positive electrode active material comprises a core; and a shell disposed on a surface of the core,
wherein the core comprises a first phosphate represented by Formula 1, and
the shell comprises a second phosphate represented by Formula 2:

[Formula 1]          $Li_{1+x1}[Mn_{1-a1-b1}Fe_{a1}M^1{}_{b1}]PO_4$

wherein, in Formula 1, $M^1$ comprises at least one selected from the group consisting of aluminum (Al), magnesium (Mg), nickel (Ni), cobalt (Co), titanium (Ti), gallium (Ga), copper (Cu), vanadium (V), niobium (Nb), zirconium (Zr), cerium (Ce), indium (In), zinc (Zn), and yttrium (Y), and $-0.1 \leq x1 \leq 0.1$, $0.5 < a1 < 1.0$, and $0.0 \leq b1 \leq 0.1$, and

[Formula 2]          $Li_{1+x2}[Mn_{1-a2-b2}Fe_{a2}M^2{}_{b2}]PO_4$

wherein, in Formula 2, $M^2$ comprises at least one selected from the group consisting of Al, Mg, Ni, Co, Ti, Ga, Cu, V, Nb, Zr, Ce, In, Zn, and Y, and $-0.1 \leq x2 \leq 0.1$, $0.0 \leq a2 < 0.5$, and $0.0 \leq b2 \leq 0.1$.

2.   The positive electrode material powder of claim 1, wherein the first phosphate is represented by Formula 1-1:

[Formula 1-1]          $Li_{1+x1}[Mn_{1-a1-b1}Fe_{a1}M^1{}_{b1}]PO_4$

wherein, in Formula 1, $M^1$ comprises at least one selected from the group consisting of Al, Mg, Ni, Co, Ti, Ga, Cu, V, Nb, Zr, Ce, In, Zn, and Y, and $-0.1 \leq x1 \leq 0.1$, $0.6 \leq a1 \leq 0.8$, and $0.0 \leq b1 \leq 0.1$.

3. The positive electrode material powder of claim 1, wherein the second phosphate is represented by Formula 2-1:

[Formula 2-1] $Li_{1+x2}[Mn_{1-a2-b2}Fe_{a2}M^2_{b2}]PO_4$

wherein, in Formula 2, $M^2$ comprises at least one selected from the group consisting of Al, Mg, Ni, Co, Ti, Ga, Cu, V, Nb, Zr, Ce, In, Zn, and Y, and $-0.1 \leq x2 \leq 0.1$, $0.2 \leq a2 \leq 0.4$, and $0.0 \leq b2 \leq 0.1$.

4. The positive electrode material powder of claim 1, wherein a molar ratio (Fe/Mn) of iron (Fe) to manganese (Mn) in the positive electrode active material is in a range of 0.4 to 2.4.

5. The positive electrode material powder of claim 1, wherein a volume ratio of the core to the shell is in a range of 20:80 to 80:20.

6. The positive electrode material powder of claim 1, wherein the positive electrode material powder has an average particle diameter $D_{50}$ of 0.5 $\mu$m to 2.0 $\mu$m.

7. The positive electrode material powder of claim 1, wherein the positive electrode material powder has a Brunauer-Emmett-Teller (BET) specific surface area of 5 $m^2$/g to 30 $m^2$/g.

8. The positive electrode material powder of claim 1, wherein the positive electrode material powder has a press density measured after pressing at a pressure of 3 tons of 2.40 g/cc or more.

9. The positive electrode material powder of claim 1, further comprising a coating layer containing carbon which is disposed on the shell.

10. The positive electrode material powder of claim 9, wherein an amount of the carbon contained in the coating layer is in a range of 0.1 wt% to 5.0 wt% based on a total weight of the positive electrode active material.

11. A positive electrode comprising the positive electrode material powder of claim 1.

12. A lithium secondary battery comprising the positive electrode of claim 11; a negative electrode disposed to face the positive electrode; and an electrolyte.

## INTERNATIONAL SEARCH REPORT

| International application No. |
| --- |
| **PCT/KR2025/011279** |

### A. CLASSIFICATION OF SUBJECT MATTER

**H01M 4/36**(2006.01)i; **H01M 4/58**(2010.01)i; **H01M 4/136**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/36(2006.01); H01M 4/136(2010.01); H01M 4/1397(2010.01); H01M 4/58(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 양극 활물질(cathode active material), 리튬-망간-철-인산염(lithium manganese iron phosphate) 코어-쉘(core-shell), 리튬 이차 전지(lithium secondary battery)

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2013-0066326 A (APPLIED MATERIALS, INC. et al.) 20 June 2013 (2013-06-20) <br> paragraphs [0073], [0106], [0128], [0156]; claims 1-3, 7, 9, 10, 33 | 1-12 |
| A | CN 116216682 A (GUANGDONG BRUNP RECYCLING TECHNOLOGY CO., LTD. et al.) 06 June 2023. <br> paragraphs [0108], [0109] | 1-12 |
| A | CN 116364924 A (EVE ENERGY CO., LTD.) 30 June 2023 (2023-06-30) <br> claim 1 | 1-12 |
| A | CN 110416525 A (SHANGHAI HUAYI (GROUP) CO.. LTD.) 05 November 2019 (2019-11-05) <br> abstract | 1-12 |
| A | US 2023-0361273 A1 (CONTEMPORARY AMPEREX TECHNOLOGY CO., LIMITED) 09 November 2023 (2023-11-09) <br> claim 1 | 1-12 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **31 October 2025** | **31 October 2025** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2025/011279**

| Patent document cited in search report | | | Publication date (day/month/year) | Patent family member(s) | | | Publication date (day/month/year) |
|---|---|---|---|---|---|---|---|
| KR | 10-2013-0066326 | A | 20 June 2013 | CN | 103548189 | A | 29 January 2014 |
| | | | | CN | 103548189 | B | 17 August 2018 |
| | | | | EP | 2792006 | A1 | 22 October 2014 |
| | | | | EP | 2792006 | A4 | 08 July 2015 |
| | | | | EP | 2792006 | B1 | 06 June 2018 |
| | | | | JP | 2015-505123 | A | 16 February 2015 |
| | | | | JP | 6326372 | B2 | 16 May 2018 |
| | | | | US | 2014-0342229 | A1 | 20 November 2014 |
| | | | | US | 2018-0047980 | A1 | 15 February 2018 |
| | | | | WO | 2013-089426 | A1 | 20 June 2013 |
| CN | 116216682 | A | 06 June 2023 | CN | 116216682 | B | 07 March 2025 |
| CN | 116364924 | A | 30 June 2023 | CN | 116130634 | A | 16 May 2023 |
| | | | | WO | 2024-174374 | A1 | 29 August 2024 |
| CN | 110416525 | A | 05 November 2019 | CN | 110416525 | B | 27 September 2022 |
| US | 2023-0361273 | A1 | 09 November 2023 | CN | 117769773 | A | 26 March 2024 |
| | | | | EP | 4280309 | A1 | 22 November 2023 |
| | | | | EP | 4280309 | A4 | 10 April 2024 |
| | | | | US | 11888150 | B2 | 30 January 2024 |
| | | | | WO | 2023-184335 | A1 | 05 October 2023 |

Form PCT/ISA/210 (patent family annex) (July 2022)

**EP 4 769 554 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240102780